# EUROPEAN PATENT SPECIFICATION

(11) **EP 2 182 880 B1**
(45) Date of publication and mention of the grant of the patent: **11.10.2017**
(21) Application number: 08799969.4
(22) Date of filing: 29.08.2008
(51) Int. Cl.: A61C 7/00, A61C 7/36

(54) **AN ORTHODONTIC APPLIANCE**
ORTHODONTISCHE ANWENDUNG
APPAREIL ORTHODONTIQUE

(30) Priority: 29.08.2007 AU 2007904670 P
(43) Date of publication of application: 12.05.2010
(73) Proprietor: Farrell, Christopher John, Helensvale, QLD 4212 (AU)
(72) Inventor: Farrell, Christopher John, Helensvale, QLD 4212 (AU)
(74) Representative: Grosfillier, Philippe
(86) International application number: PCT/AU2008/001293
(87) International publication number: WO 2009/026659

(56) References cited:
- WO-A2-03/101331
- AU-B2- 2002 335 795
- US-A- 3 379 193
- US-A- 3 871 370
- US-A- 4 304 227
- US-A1- 2007 240 724
- US-B1- 6 368 106
- US-B1- 6 837 246

## Description

### FIELD OF THE INVENTION

This invention relates to an orthodontic appliance.

This invention relates particularly but not exclusively to an active orthodontic appliance for use in the treatment of a Class 3 malocclusion. It will therefore be convenient to hereinafter describe the invention with reference to this example application. However at the same time it is to be clearly understood that the invention is capable of broader application. For example the appliance may also have application in the treatment of other conditions and other types of malocclusions. Further the orthodontic appliance can also be used as a functional orthodontic appliance and as a passive orthodontic appliance.

### BACKGROUND TO THE INVENTION

Humans have an upper jaw called a maxilla forming an upper arch and a hinged lower jaw called a mandible forming a lower arch. A patient has correct dental occlusion when the upper arch matches the size and shape of the lower arch such that the teeth of the upper and lower jaw come together when the jaws are closed. Further with correct occlusion individual teeth of the upper and lower arch are positioned along the length of the arch relative to each other such that they fit together correctly.

However while the upper and lower arches are broadly of the same size they are subtly offset relative to each other. Specifically the teeth of the upper arch are offset relative to the teeth of the tower arch so that at least part of each tooth of the upper arch is positioned outward of the corresponding tooth on the lower arch. Further the incisors of the lower arch are positioned behind the incisors of the upper arch.

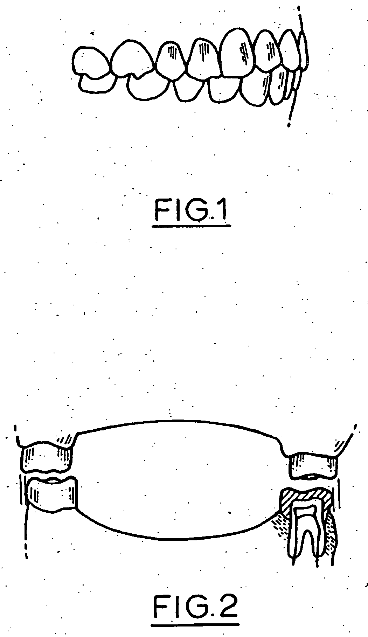

Figs. 1 and 2 are respectively a side view and a rear view of a user's upper and lower arches showing correct dental occlusion. Fig 1 clearly shows the incisors of the upper jaw positioned forward of the incisors of the lower jaw. Further the rear view shows the offset of the teeth of the lower jaw relative to the upper jaw in the region of the rear molars.

However malocclusions which involve a mismatch in the sizes of the upper and lower jaw are a relatively common condition in human populations around the world.

A Class 2 malocclusion occurs when the upper jaw of a patient is larger than the lower jaw. This is caused by a lack of development in the lower jaw of a user resulting in a lower jaw with a smaller arch than the upper jaw. A consequence of this is that the teeth of the upper jaw project out anteriorly proud of the teeth of the lower jaw producing a deep bite curve between the teeth of the upper and lower jaws. Caucasian populations are particularly prone to a Class 2 malocclusion.

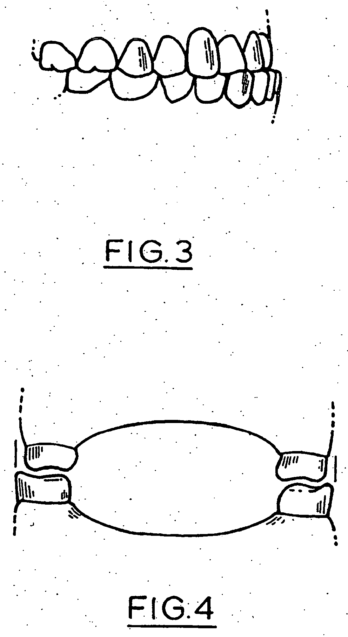

Another type of malocclusion is a Class 3 malocclusion in which the lower arch is more developed than the upper arch and does not correctly match the size of the upper arch. Typically a patient with a class 3 malocclusion has a mid facial region that is underdeveloped, e.g. the anterior region of the maxilla on the upper arch is underdeveloped and is positioned behind the anterior region of the lower arch. This can cause the anterior incisor teeth of the lower arch to project out anteriorly proud of the incisor teeth of the upper arch as shown in Fig 3 of the drawings. As discussed above for correct dental occlusion, the incisors of the lower arch should be received behind those of the upper arch with an offset of about 2 mm.

A class 3 malocclusion may extend lengthwise along the arch and affect the canine regions and the molar regions as well as the incisor region. For example the molar region of the upper arch may be underdeveloped and of narrower width than that of the lower arch. The mismatch of the upper and lower arches in the molar region of a patient is shown in Fig 4 of the drawings. Class 3 malocclusions are particularly common in Asian populations around the world.

Essentially the class 3 malocclusion is caused by a mismatch in the growth of the maxilla and mandible in the developmental stages of a child's growth. This can be caused by myofunctional habits that encourage growth inhibiting forces to be applied to structures of the upper arch and growth promoting forces to be applied to structures of the lower arch. For example the tongue can apply a considerable pressure to the lower arch to promote its development. Further the lips and cheeks of a user can apply a considerable inward pressure to the arch, e.g. the upper arch of a user, to retard or inhibit development of the upper arch.

One way of treating a Class 3 malocclusion is by surgical intervention in which the lower arch or mandible is set in the ideal bite position with a correct dental occlusion. However this treatment is very aggressive and invasive. Further the results achieved with this treatment can be mixed.

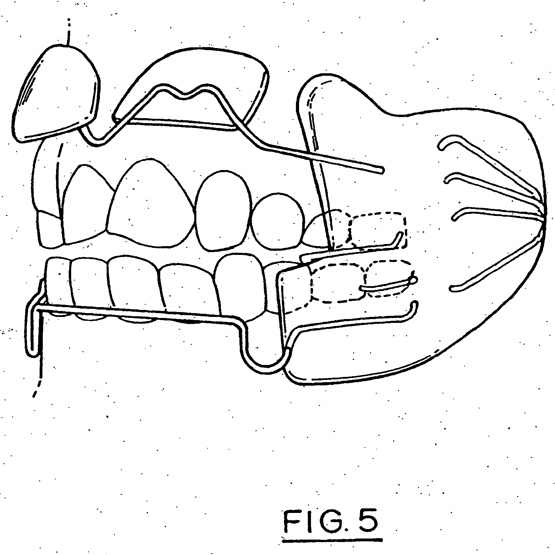

Another way of treating a class 3 malocclusion has been to custom build an appliance known as a Frankel appliance to fit the jaw and mouth of a user. A custom made Frankel appliance is shown in Fig 5. Essentially the Frankel appliance is made by taking bite impressions of a user's mouth and then building a model of a patient's bite. An appliance that is sized and shaped to be positioned on the upper and lower arches of a particular user is built up from this bite model in a dental laboratory. However the results obtained by treating a Class 3 malocclusion with such a Frankel appliance have been mixed. The mid facial region, or anterior incisor region of the upper arch can tend to remain underdeveloped. Further the time taken to achieve reasonable correction of a Class 3 malocclusion can often be very lengthy. US 4 304 227 A discloses an appliance according to the preamble of claim 1 of the present application. Clearly therefore it would be advantageous if a less aggressive and a less invasive form of treating a Class 3 malocclusion than maxilla surgery could be devised. It would also be advantageous if a treatment could be devised for promoting correction of the mismatch in sizes of the upper and lower arches along the full length of the arch simultaneously. Yet further it would be advantageous if the treatment times for treating Class 3 malocclusions in a developing child could be reduced.

### SUMMARY OF THE INVENTION

The present invention is an orthodontic appliance according to claim 1. Preferred embodiments are defined in claims 2-14. According to one example there is provided an orthodontic appliance for being received in the mouth of a user, comprising:
a mounting arrangement for mounting over an upper arch of a user, and an outer spacing formation on the mounting arrangement for holding a portion of the buccal mucosa away from at least one of the incisor and canine regions of a user's upper arch so that the spaced portion of the buccal mucosa does not apply an inward force to this region of the upper arch.

The outer spacing formation may hold a portion of the buccal mucosa away from the incisor region of the user's upper arch. The outer spacing formation may also hold a portion of the buccal mucosa away from the molar region of the user's upper arch. Yet further the spacing formation may also hold a portion of the buccal mucosa away from the canine region of the user's upper arch. Conveniently the outer spacing formation may extend continuously across the incisors, the canines and the molars of a user.

The mounting arrangement may comprise an outer wall and an inner wall, and a web extending between the inner and the outer walls. The outer wall, the web, and the inner wall may collectively define an upper channel within which the upper arch and teeth can be received to mount the appliance to an upper arch of a user.

The outer spacing formation may be formed by the outer wall of the mounting arrangement.

The outer and inner walls of the mounting arrangement may include an incisor region extending across the incisors of a user's arch and two canine regions on each side of the incisor region for extending across the canines of a user, and two molar regions on each side, e.g. of the canine regions, for extending across the molars of a user.

The mounting arrangement including the inner and outer walls may have a generally curved form with a curved incisor region. The canine and molar regions may be in the form of two arms or arm regions extending rearward from each end of the incisor region whereby to form overall an arch shaped form. Thus the mounting arrangement may have a U shaped or parabolic form.

The mounting arrangement may be resiliently flexible. In particular the outer and inner walls and the web may be able to flex resiliently when the arms are moved or displaced out of a resting position, e.g. corresponding to a desired arch form, to accommodate a different arch width in a user, e.g. a narrow upper arch. The deformed walls and the web may apply a return force to the arch tending to return it to the resting position. The resilience of the inner and outer walls may also assist in fitting the appliance to the arch and teeth.

In addition to defining the upper channel described above, the outer wall, the web, and the inner wall may also define a lower channel within which the lower arch teeth can be received. The inner and outer walls may each have upper and lower terminal edges, and the web may be positioned intermediate the upper and lower terminal edges of the inner and outer walls whereby to define the upper and lower channels. The mounting arrangement may have a generally H shaped cross section along its length.

The outer wall defined above, may comprise an upper outer wall portion that is above the web, and a lower outer wall portion that is below the web. Similarly the inner wall may have an upper inner wall portion that is above the web and a lower inner wall lower portion that is below the web.

The outer and inner walls may define the following surfaces. The outer wall may have a buccal outer surface, an outer wall upper channel surface and an outer wall lower channel surface. The inner wall may have a lingual inner surface, an inner wall upper channel surface and an inner wall lower channel surface. The web may include an upper channel web surface and a lower channel web surface.

The upper channel may be defined by the outer wall upper channel surface, the upper channel web surface and the inner wall upper channel surface. In use the teeth and gums of the upper arch of a user make contact with one or more of these surfaces to mount the mounting arrangement thereto. Correspondingly the lower channel may be defined by the outer wall lower channel surface, the lower channel web surface and the inner wall lower channel surface described above, that similarly make contact with the teeth and gum tissues of the lower arch, e.g. to fit the mounting formation on the arch/es. Further the mounting arrangement assists in the correct positioning of a user's lower arch relative to their upper arch by having upper and lower channels for receiving respectively the teeth of the upper and lower arches.

The outer wall upper channel surface may be vertically offset relative to the outer wall lower channel surface. Specifically the lower channel surface may be set back relative to the upper channel surface by a distance of 0.5 mm-2.0 mm, e.g. 1.0 mm to 1.5 mm. In addition, the inner wall upper channel surface may be vertically off-set relative to the inner wall lower channel surface.

The upper channel web surface may be substantially planar, e.g. flat and planar, for end surfaces of a user's teeth to bear against. The upper channel web surface may have some curvature as the web surface leads into the outer wall and inner wall upper channel surfaces respectively. The outer wall upper channel surface may extend upward away from the web surface broadly in a straight line.

The outer wall upper channel surface may have a substantially upright orientation (as distinct from a sloping orientation) and may extend upwardly away from the upper channel web surface at an angle of 80 degrees to 100 degrees to the upper channel web surface, e.g. at 85 degrees to 90 degrees.

The buccal surface of the upper portion of the outer wall may also extend upwardly away from the upper channel web surface at an angle of 80 degrees to 100 degrees to the upper channel web surface, e.g. at 85 degrees to 90 degrees.

In one form the upper portion of the outer wall, including the outer wall channel surface and the upper portion of the buccal surface of the outer wall, may be substantially vertically extending.

The outer wall upper channel surface may extend up to a height of at least 8 mm, e.g. at least 10 mm, above the upper channel web surface along the incisor region thereof. In some forms the outer wall upper channel surface may extend up to a height of 11 to 15 mm above the upper channel web surface. The outer wall upper channel surface may extend up to a minimum height (or lowest height) along its length of at least 8 mm above the upper channel web surface.

The upper channel web surface and the outer wall upper channel surface may be suitably dimensioned to permit development of the upper arch of a user and consequent displacement of the teeth of the upper arch relative to the lower arch over time. The upper channel web surface may have a greater width between the outer and inner walls than the lower channel web surface.

The outer wall upper channel surface may have a step formation defined therein intermediate the web upper channel surface and the terminal edge of the outer wall.

The step formation may step outward so that the wall is thicker below the step formation, and the step formation may extend substantially the full length of the outer wall parallel to the upper channel web surface. The purpose of the step is to increase the space between the upper arch and associated gum tissues and the outer wall thereby encouraging development of the midfacial region.

Apart from the step formation, the upper portion of the outer wall may have a substantially even cross sectional thickness in the direction of its height and also along its length.

The inner wall upper channel surface is arranged and positioned so that it bears up against the teeth and associated gum tissues of the upper arch of a user, e.g. with a fit that makes contact with the teeth and associated gums of a user. In particular the inner wall upper channel surface may be sized to fit snugly against the teeth and associated gum tissues along the full arch length. This may assist with fitting the mounting formation to the arch and teeth.

The inner wall upper channel surface may curve upward and away from the upper channel web surface in a direction away from the upper channel web surface, e.g. towards the interior of the U shaped form of the inner wall. The curvature of the inner wall upper channel surface may be quite pronounced. Further the width or extent of the inner wall upper channel surface may deplete in a direction towards the rear of the U shaped wall. The inner wall upper channel surface may be short and substantially upright towards its rear ends.

The lower web surface, like the upper web surface, may be substantially planar for end surfaces of a user's teeth to bear against it. Overall the web may be of broadly similar cross sectional thickness across its width and along its length.

The outer wall lower channel surface may extend downwardly at an angle of 80 degrees to 90 degrees to the lower web surface, e.g. at 85 to 89 degrees to the lower web surface. The outer wall lower channel surface may also extend downwardly at an angle of 80 degrees to 90 degrees to the upper web surface,

The vertical extent of the lower portion of the outer wall may be significantly less than that of the upper portion of the outer wall. For example the vertical extent or vertical height of the outer wall lower channel surface may be 2 to 8 mm, from the lower channel web surface to the terminal lower edge of the outer wall.

The outer wall lower channel surface is designed to fit closely to the teeth and lower arch of a user and is not dimensioned to be spaced from the buccal surface of the teeth, like the upper portion of the outer wall.

The lower channel surface of the outer wall, and the lower portion of the buccal surface of the outer wall may be substantially linear, when extending in a direction from the lower web surface to the terminal lower edge of the outer wall. The lower portion of the buccal surface of the outer wall may be inclined relative to the upper portion of the buccal surface of the outer wall, e.g. at an angle of 2 to 10 degrees.

The orthodontic appliance may further include a tongue elevating formation on the mounting arrangement for elevating the tongue of a user to a position where it does not apply pressure to the lower arch of the user. The tongue elevating formation may be formed on the inner wall.

The inner wall lower channel surface may curve outwardly away from the lower channel web surface in a direction extending away therefrom, e.g. towards the interior of the U shaped form. The lower portion of the lingual surface of the inner wall may also curve downwardly in a similar fashion.

The lower portion of the inner wall may include a a terminal edge region extending along the terminal lower edge thereof. The tongue elevating formation may be positioned on the terminal edge region.

The tongue elevating formation may be formed by having the terminal edge region of increased thickness along at least part of its length. In particular the terminal edge region may be a bulbous terminal edge region extending along at least the intermediate region of the inner wall. The bulbous terminal edge region may have a diameter of 3-6 mm.

The bulbous terminal edge region may extend along the incisor region and may also extend along at least part of the canine and/or molar regions of the inner wall. In one form the bulbous terminal edge region may extend along at least half of the length of the inner wall.

The bulbous terminal edge region may encourage a user's tongue to adopt a position resting on the bulbous terminal edge region, e.g. an upper surface thereof so that it does not exert a significant developmental pressure on the lower arch. The tongue elevating formation may have an uppermost point, and the uppermost point of the elevating formation may be positioned 2 mm to 6 mm beneath the lower channel web surface, e.g. 3 mm to 5 mm below the lower channel web surface.

The outer wall may have a cut away in the incisor region thereof for permitting the molar regions of the inner and outer walls to be moved towards and away from each other to accommodate different arch sizes in different users. The cutaway may be located in the upper portion of the outer wall, and conveniently the cutaway may be broadly centrally positioned.

Similarly the inner wall may have at least one cutaway defined broadly in the incisor region for facilitating the arms of the inner wall being moved towards and away from each other to accommodate varying arch widths. The inner wall may have a cutaway defined in each of the upper and lower portions thereof.

The inner wall may further have a tongue tab formed in the upper portion thereof. The tongue tab indicates a correct tongue position to a user when the tip of their tongue bears against the tongue tab. The tongue tab typically is located in a front central position on the inner wall and may be formed integrally with the inner wall as a part thereof. The tongue tab is quite different to the tongue elevating formation in that it does not actively direct a user's tongue to adopt a correct position. It simply provides a locator for the tongue tip that helps a user to voluntarily position their tongue correctly.

Conveniently the inner wall may have two said cutaways on the upper portion thereof, one on either side of the tongue tab.

The upper portion of the outer wall may include two further recess cutaways on respectively the left and right arms of the mounting arrangement, e.g. in the molar region thereof. These further recess cutaways contour around a bony protrusion at this point along the upper arch and thereby permit the protrusion to project there through. This feature therefore increases user comfort when the appliance is worn.

The mounting arrangement may have apertures defined therein. In particular the mounting arrangement may have two laterally spaced apertures passing through the outer wall, the web, and the inner wall, in the incisor region thereof.

The mounting arrangement may form a teeth contacting member that interacts with a user's mouth and also has external structural features such as the outer wall, the inner wall the web, the tongue elevating formation and the tongue tab integrally formed therewith.

The appliance further includes an internal structure in the form of a base member that is received internally, e.g. encased, within the teeth contacting member.

The base member may be made of a stiffer material than the teeth contacting member for conferring some stiffness and structural rigidity to the mounting arrangement while still providing it with an ability to resiliently flex to enable it to be deformed out of a resting position to accommodate different users.

The base member may comprise a framed structure, e.g. an open framed structures, to assist in conferring the requisite stiffness and structural rigidity while still providing said resilience. The open framed structure may comprise a framed web portion broadly coextensive with the web of the mounting arrangement and a framed wall portion that is broadly coextensive with the outer wall. The framed wall portion may comprise an upper framed wall portion on one side of the web portion extending across the upper portion of the outer wall and a lower framed wall portion extending across the lower portion of the outer wall.

Each said framed portion may comprise two longitudinal frame members and a plurality of cross members extending between the two longitudinal members at spaced intervals along their length. One of the longitudinal members of the upper framed wall portion may be joined to one of the longitudinal members of the lower framed wall portion, and one of the longitudinal members of the framed web portion may be joined to a longitudinal member of the upper framed wall portion.

The lower framed wall portion may be vertically offset with respect to the upper framed wall portion. In particular the lower framed wall portion may be set back relative to the upper framed wall portion by a distance on 0.5 to 2.0 mm, e.g. 1.0 mm to 1.5 mm. This corresponds broadly to the similar offset between the outer wall upper channel surface and the outer wall lower channel surface.

As described above the frame structure of the base member may be made of a material that is selected to provide sufficient stiffness and rigidity while still permitting some resilient deformation and resilient flexing of the member to accommodate different arch widths in different users. The material of the framed structure of the base member may be selected from the group consisting of polyamide, polyethylene, polypropylene, polyurethane, polycarbonate or santoprene. Conveniently the framed structure may be made from a polyamide material, e.g. formed by condensation polymerization of amide monomers or a ring opening polymerization of caprolactam. In particular the polyamide polymer may be a material sold under the trade mark of NYLON™. The combination of stiffness and rigidity on the one hand and resilience on the other hand has been found unexpectedly to be particularly useful. While capable of flexing when subjected to a bending force this polyamide material has a good memory and tends to return its original resting position or its original form. The framed structure may be formed as an integral article made of a homogeneous material in a moulding operation, e.g. an injection moulding operation.

The teeth contacting member may be made of a cushioning material for enabling the mounting arrangement to be comfortably fitted against the gums of a user. The teeth contacting member may be made of a polymeric material containing silicon as a repeating monomer unit within the polymer, e.g. a siloxane polymer or a silane polymer, forming a synthetic elastomer which is a cross linked polymer reinforced with silica, yielding a soft silicon rubber material. Conveniently medical grade silicon rubber may be used because it is already widely used in medical applications and has been approved for use in relation to humans. Silicon rubber has some ability to deform like a cushion and is therefore soft and comfortable against the gums and teeth of a user. Instead the teeth contacting member may be made of an addition polymer such as PVC (polyvinylchloride). This material is available in different grades and a soft grade can be chosen for this application. The teeth contacting member may be moulded as an integral article, around said base member, in a second injection moulding operation. The inner and the outer wall, the web, and the tongue elevating formation and the tongue tab may be integrally moulded with the teeth contacting member.

According to another example there is provided an orthodontic appliance for being received in the mouth of a user, comprising:
a mounting arrangement for mounting over an upper arch of a user, and a tongue elevator mounted on the mounting arrangement for elevating the tongue of a user to a position where it does not apply significant developmental pressure to the lower arch of a user.

The mounting arrangement may comprise an outer wall, and an inner wall, and a web extending between the inner and the outer walls. The outer wall, the web, and the inner wall, may collectively define an upper channel within which the upper arch teeth can be received, and a lower channel within which the lower arch teeth can be received. The tongue elevating formation may be formed on the inner wall.

The appliance may further include an outer spacing formation on the mounting arrangement, and the outer spacing formation may be formed by the outer wall of the mounting arrangement, e.g. an upper portion thereof defining the upper channel.

According to another aspect of this invention there is provided an orthodontic appliance for being received in the mouth of a user, comprising:
a mounting arrangement for mounting over an upper arch of a user having an arch shape, the mounting arrangement being formed from a resiliently flexible material so that the mounting arrangement is operatively able to adapt to the arch shape and associated teeth of the user; and
an outer spacing formation on the mounting arrangement for holding a portion of the buccal mucosa spaced away from at least part of a user's upper arch so that the buccal mucosa does not apply an inward force to this region of the upper arch.

The mounting arrangement may be formed with an arch form corresponding to correct dental occlusion so that when the appliance is applied to a user having an underdeveloped upper arch, the mounting arrangement is resiliently flexed out of its original position and as a result will apply a return force to the teeth and arch tissues of the upper arch of a user that will tend to expand the upper arch of a user.

The mounting arrangement may comprise an outer wall and an inner wall, and a web extending between the inner and the outer walls defining an upper channel for the arch having a form corresponding to correct dental occlusion in its original position. The outer spacing formation may be formed by the outer wall of the mounting arrangement and may extend continuously over the incisors, canines and molars of a user's upper arch in use.

The mounting arrangement may have a curved incisor region with trailing arm regions extending rearward from each side of the incisor region.

The trailing arm regions may be resiliently flexed out of their resting position, and the mounting arrangement will apply a return force tending to return the arm regions to the original position when this occurs.

The arm regions of the channel may be moved towards each other to accommodate a narrowed upper arch width, and in response thereto the mounting arrangement will apply a return force in an outward direction tending to expand the upper arch to a position corresponding to the original position of the mounting arrangement.

The distortion of the web part of the mounting arrangement may generate a significant proportion of the return force when the mounting arrangement is deformed out of its original position by virtue of the fact that its major surfaces are deformed by the movement of the arm regions towards and away from each other. The reduced profile of the web in the forwardmost incisor region assists in enabling the arm regions to be moved towards and away each other. In a fortuitous coincidence the incisor teeth have a thinner end profile than the molar teeth thereby facilitating this reduced profile of the web in the incisor region.

The upper and lower channels may have sufficient dimensional tolerance to be fitted to a range of users with different teeth sizes.

The appliance may comprise a teeth contacting member defining said mounting arrangement and said outer spacing formation, and a base member encased within the mounting arrangement.

The teeth contacting member may be formed of a resiliently flexible material that is also soft for forming a cushion for bearing against the teeth and gums of a user, e.g. that has some ability to conform to the contours of the surface of arch and teeth tissues against which it bears.

The base member may be made of a material having resilient flexibility that is stiffer than the material of the mounting arrangement.

The appliance may include a tongue elevating formation mounted on the inner wall. The tongue elevating formation may be integrally formed with the inner wall and thereby the rest of the mounting arrangement by moulding, e.g. injection moulding.

According to yet another example there is provided an orthodontic appliance, comprising:
a mounting arrangement for mounting over an upper arch of a user including an outer wall and an inner wall, and a web extending between the outer wall and the inner wall, wherein the outer wall, the web, and the inner wall collectively define an upper channel within which the upper arch and associated teeth of a user can be received whereby to mount the mounting arrangement to the upper arch, and a lower channel for receiving the lower arch and associated teeth of a user, wherein the outer wall has an upper portion that is configured to form an outer spacing formation for holding the buccal mucosa spaced away from the gums and teeth of the upper arch.

The mounting arrangement may have an incisor region and two arms extending back from the incisor region that extend across the canines and molars of the upper arch of a user, and the mounting arrangement may be resiliently flexible to enable the arms to be moved towards and away from each other to some extent to accommodate different arch sizes. The resiliently flexible mounting arrangement also helps the mounting arrangement to be fitted onto the arch and teeth of a user.

The appliance may include a tongue elevating formation below the web for interfering with the tongue of a user and forcing the tongue to be elevated.

According to another aspect of this invention there is provided a method of manufacturing an appliance including:
moulding a base member from a material that when moulded has stiffness and rigidity while still permitting some resilient flexing thereof in a first moulding step;
moulding a mounting arrangement onto the base member in a second moulding step, the mounting arrangement having an integrally formed outer spacing formation for spacing part of the buccal mucosa away from the upper arch.

The method may include forming a tongue elevating formation on the mounting arrangement that is integrally moulded therewith.

The mounting arrangement may be moulded from a material that has resilient flexibility.

The base member and the mounting arrangement may each be moulded by injection moulding from a polymeric material. The technique whereby an internal base member is made of a first polymeric material in a first injection moulding operation, and then the teeth contacting member is moulded from a second polymeric material onto the base member to effectively encase the base member within the teeth contacting member is referred to as dual moulding.

The appliance may be manufactured on a commercial scale with a moulding apparatus in several standard appliance sizes that can then be fitted to the bulk of prospective user's in the population each of which has their own individual arch shape. Applicant envisages that three to five different sizes of appliance may be required to cover the overwhelming majority of prospective user's within human populations. Thus the appliance is in the nature of a manufactured appliance that is moulded in a limited number of sizes without any reference to the individual arch characteristics of the ultimate end user. The appliance is not custom built in a laboratory.

According to another example there is provided a method of treating a malocclusion of the upper and the lower arches, including:
fitting an orthodontic appliance as defined in any one of the first to fourth aspects of the invention above to a patient.

The method may include instructing the patient to wear the appliance on repeated occasions at spaced apart time intervals over a treatment period. The instructing may include instructing a user to wear the appliance for several hours a day, e.g. overnight while a user is sleeping. The method may include instructing a patient to wear the appliance at spaced intervals. The treatment period may be at least 12 months, e.g. at least 18 months.

The method may include selecting one size of appliance from a range of sizes in which the appliance is manufactured, the chosen size of appliance being the one that best fits the arch and teeth of the user.

The method may be used for treating a class 3 malocclusion, and the treatment period may continue until the malocclusion has been substantially corrected, e.g. the incisors on the lower arch are received behind the incisors on the upper arch.

The method may include monitoring a correction of the malocclusion at spaced intervals over the treatment period.

The method may further include maintaining correct dental occlusion in a patient after the malocclusion has been corrected. This may involve directing the patient to wear the appliance less frequently in a given time period than when active correction of the malocclusion was being carried out.

According to another example there is provided an orthodontic appliance for being received in the mouth of a user, comprising:
a mounting arrangement for mounting over an upper arch of a user, the mounting arrangement comprising an outer wall and an inner wall, and a web extending between the inner and the outer walls, so as to define collectively an upper channel and a lower channel within which the upper arch teeth and the lower arch teeth are received respectively, the outer wall defining an outer wall upper channel surface and a outer wall lower channel surface that are vertically offset relative to each other.

The outer wall lower channel surface may be set back relative to the outer wall upper channel surface by a distance of between about 0.5 mm and 2.0 mm.

The inner wall may define an inner wall upper channel surface and a lower wall channel surface and the inner wall lower channel surface may be set back relative to the inner wall upper channel surface. The distance of offset may be between about 0.5 mm and 2.0 mm.

The offset may occur along the full length of the inner wall and the offset may also occur along the full length of the outer wall.

The offset brings the teeth of the upper and lower arches into correct dental occlusion in the final stages of displacement of the teeth. If the channel surfaces are vertically aligned with each other the upper and lower teeth will be brought into edge to edge abutment. However this does not reflect correct dental occlusion and thus a device having vertically aligned channel surfaces will do not bring the upper and lower arch teeth of a patient into correct dental occlusion.

The outer wall may form an outer spacing formation as described in any one of the preceding aspects of the invention above and the appliance may include a tongue elevating formation formed on the inner wall as described in any one of the preceding aspects of the invention above.

### DETAILED DESCRIPTION OF THE INVENTION

An orthodontic appliance for treating *inter alia* a Class 3 malocclusion in accordance with this invention may manifest itself in a variety of forms. It will be convenient to hereinafter describe at least one embodiment of the invention in detail with reference to the accompanying drawings. The purpose of providing this detailed description is to instruct persons having an interest in the subject matter of the invention how to carry the invention into practical effect. However it is to be clearly understood that the specific nature of this detailed description does not supersede the generality of the preceding broad description. In the drawings:
Fig. 1 is a schematic side view of a dental model showing correct dental occlusion;
Fig. 2 is a schematic rear view of the model of Fig. 1 showing correct dental occlusion;
Fig. 3 is a schematic side view of a dental model showing a Class 3 malocclusion with the incisor teeth of the lower arch positioned proud of the incisors of the upper arch;
Fig. 4 is a schematic rear view of a patient's teeth showing a Class 3 malocclusion with the upper arch being of narrower width than the lower arch;
Fig. 5 is a schematic three dimensional view of a Frankel appliance mounted on a dental model of a patient;
Fig. 6 is a lower three dimensional view from the rear of an orthodontic appliance in accordance with the invention;
Fig. 7 is an upper three dimensional view from the front of the orthodontic appliance of Fig. 6;
Fig. 8 is a top plan view of the appliance of Fig. 6;
Fig. 9 is a bottom plan view of the appliance of Fig. 6;
Fig. 10 is a front view of the appliance of Fig. 6;
Fig. 11 is a rear view of the appliance of Fig. 6;
Fig. 12 is a front upper three dimensional view of an internal frame structure for the orthodontic appliance shown in Fig. 6;
Fig. 13 is a rear lower three dimensional view of the frame structure shown in Fig 12;
Fig. 14 is a front view of the frame structure shown in Fig. 12;
Fig. 15 is a side view of the frame structure shown in Fig. 12;
Fig. 16 is an upper three dimensional view from the front of the appliance of Fig. 6 showing the internal frame structure encased within a teeth contacting member;
Fig. 17 is a three dimensional part sectional view of the appliance of Fig. 16 with the section taken along a midline of the appliance;
Fig. 18 is a three dimensional part sectional view of the appliance of Fig. 16 with the section taken at an intermediate position along the appliance;
Fig. 19 is a schematic side view showing the appliance fitted onto the upper and lower arches of a user;
Fig. 20 is a plan view of the appliance litted within the mouth of a user showing the teeth of the upper arch received within an upper channel thereof;
Fig. 21 is a schematic sectional side view of the appliance of Fig. 6 fitted in the mouth of a user, with the mouth tissues and teeth also being shown in section;
Fig. 22 is a part sectional rear view showing the appliance fitted in the mouth of a user with the upper and lower arch and teeth being shown in section received within upper and lower channels respectively; and
Figs. 23 to 25 show the progressive development of the upper arch and movement of the associated upper arch teeth over the course of a treatment with the appliance of Fig. 6.

Figs. 1 and 2 are schematic illustrations of a dental model showing correct occlusion of the upper and lower jaws and associated teeth. Figs. 3 and 4 are schematic drawings of a dental model illustrating a class 3 malocclusion. Correct dental occlusion and the characteristics of a class 3 malocclusion are described in some detail in the background to the invention section and will not be described further in this detailed description.

Fig. 5 is a schematic drawing of a Frankel appliance mounted on a dental model of a patient. It shows a custom made appliance that is made in a dental laboratory from bite impressions that is designed to fit only that specific user. Significantly it has no members or formations extending across the incisor or canine regions of the upper arch.

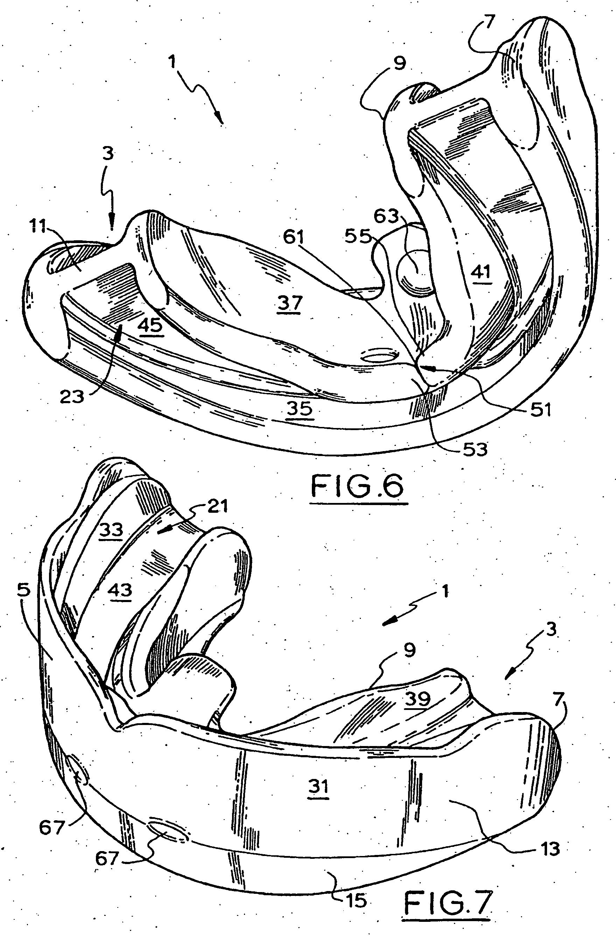

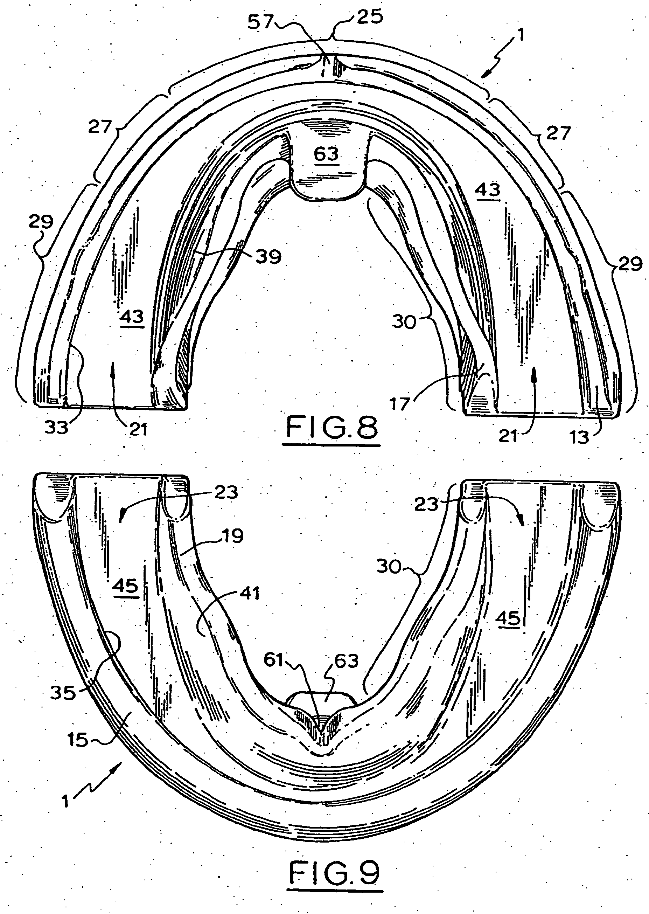

Figs. 6 to 11 show the external shape and configuration of an appliance in accordance with the invention that is indicated generally by the reference numeral 1.

The appliance 1 comprises broadly a mounting arrangement shown generally by numeral 3 for mounting over an arch of a user and an outer spacing formation shown by numeral 5 for holding a portion of the buccal mucosa away from a user's upper arch so that it does not apply an inward pressure to this region and thereby inhibit development of the upper arch.

The mounting arrangement 3 comprises an outer wall 7 and an inner wall 9 and a web 11 extending between the outer and inner walls 7, 9. The web 11 is positioned intermediate upper and lower edges of the outer and inner walls 7, 9. The outer wall 7 in turn comprises an outer wall upper portion 13 above the web 11 and an outer wall lower portion 15 below the web 11. Similarly, the inner wall 9 comprises an inner wall upper portion 17 above the web 11 and an inner wall lower portion 19 beneath the web 11.

The upper portion of the outer wall 13, the web 11 and the upper portion of the inner wall 17 collectively define an upper channel 21 facing upwardly for receiving the upper arch. The lower portion of the outer wall 15, the web 11 and the lower portion of the inner wall 19 define a lower channel 23 facing downwardly for receiving the lower arch of a user. The mounting arrangement 3 has a generally curved incisor region shown by numeral 25 corresponding to the incisor teeth on a user's arch, and canine regions 27 on each side thereof for extending across the canine teeth on a user's arch, The arrangement also includes molar regions 29, after the canine regions 27, for extending across at least part of the molar teeth on a user's arch. Each canine and molar regions 27 and 29 on one side of the incisor region 25 may be in the form of an arm shown generally by numeral 30 extending back from the incisor region 25. Overall the mounting arrangement 2 has a parabolic arch form and having a generally H shaped cross section along its length.

The outer wall 7 has a buccal outer surface 31 facing outwardly, an outer wall upper channel surface 33 facing into the upper channel 21, and an outer wall lower channel surface 35 facing into the lower channel 23. Correspondingly the inner wall 9 has a lingual surface 37 facing away from the channels 21, 23 into the middle of the U shape. It also has an inner wall upper channel surface 39 facing into the upper channel 21 and an inner wall lower channel surface 41 facing into the lower channel 23. Further the web 11 may comprise an upper channel web surface 43 and a lower channel web surface 45.

The upper channel 21 is defined by the outer wall upper channel surface 33, the upper channel web surface 43, and the inner wall upper channel surface 39. Correspondingly the lower channel 23 may be formed by the outer wall lower channel surface 35, the lower channel web surface 45 and the inner wall lower channel surface 41. It is these surfaces defining the upper and lower channels 21, 23 that in use can make contact with the teeth and surrounding mouth tissues of a user.

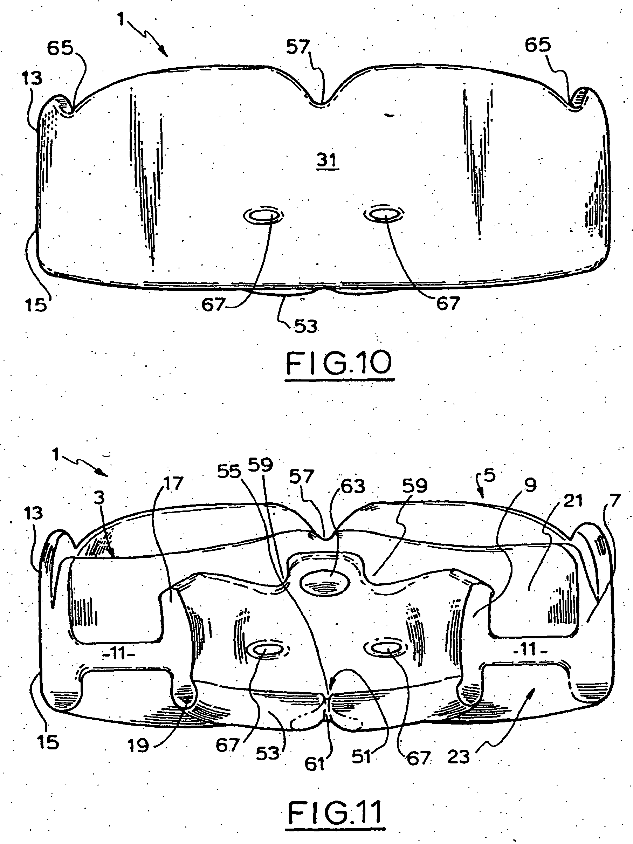

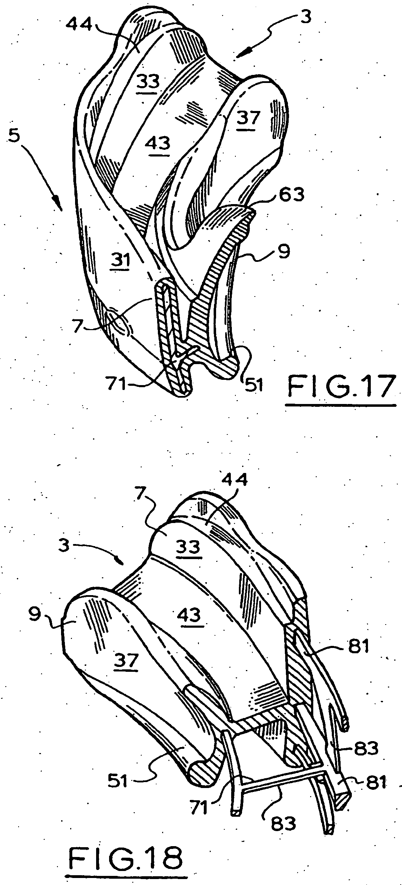

As is shown particularly clearly in Figs. 11, 17 and 22, the outer wall upper channel surface 33 is vertically offset relative to the outer wall lower channel surface 35. The outer wall lower channel surface 35 is retracted or set back relative to the outer wall upper channel surface 33 by an amount of about 1.0mm to 1.5mm corresponding to the relative upper and lower arch positions for correct dental occlusion as shown in Fig. 1.

There is also some offset of the inner wall upper channel surface 39 relative to the inner wall lower channel surface 41 as shown clearly in Figs. 11, 17 and 22 once again to reflect the arch positions for correct dental occlusion.

The mounting arrangement 3 with the upper and lower channels 21, 23 is made of a resilient material that can be deformed out of its resting for original unstressed condition (corresponding to a desired arch form) and then when the deforming force is removed it returns to its original or resting unstressed position. This feature enables the appliance 1 to be fitted to different users having different arch sizes and teeth arrangements. The inner and outer walls 9, 7 around the upper and lower channels 21, 23 as well as the web 11 can be deformed to receive the teeth and arches of a user. In particular the arms 30 comprising the regions 27 and 29 of the arrangement 3 can be moved towards each other to accommodate different users with different arches. When the appliance 1 is fitted to a user with an underdeveloped upper arch the appliance 1 will typically be deformed inwardly out of its resting position (by movement of the arms towards each other) and as a result the return force applied by the resilience of the material will urge it outwardly applying an outward force to the arch and teeth of a user. This assists with mounting the appliance onto the teeth and gums of a user. It also tends to encourage growth and development of the upper arch of a user.

Thus the ability of the material to resiliently flex enables the channels 21, 23 to receive an arch in which the teeth that are not perfectly aligned and also to enable the channels to receive arches of different sizes. It also enables the channels to receive an underdeveloped arch.

The outer spacing formation 5 is formed by the upper portion of the outer wall 13 which holds the buccal mucosa of a user away from the upper arch and associated tissues of a user so that it does not apply an inward pressure to these tissues. As shown in the drawings, the outer spacing formation 5 formed by the upper portion of the outer wall 13 extends continuously along the full length of the incisors, canines and molars of a user. This resists the application of inward pressure by tissues along these regions to allow the upper arch to develop.

The web 11 may be of a similar cross sectional thickness across its width between the inner and outer walls 9, 7. Further the upper channel web surface 43 and the lower channel web surface 45 may both be substantially planar.

The outer wall 7 as a whole, and specifically the outer wall upper channel surface 33, has a substantially upright orientation and extends away from the upper channel web surface 43 at an angle of about 85 to 90 degrees; i.e. it is near perpendicular to the upper channel web surface 43. The buccal surface 31 of the outer wall upper portion 13 may be orientated at a similar angle to the outer wall upper channel surface 33, e.g. at about 85 degrees to 90 degrees to the upper channel web surface 43.

The outer wall upper channel surface 33 extends up to a height of at least 8mm above the upper channels web surface 43 along a major portion of its length, and in some regions has a.height of about 12 to 14 mm. This prominent height extends over the bone structure of the upper arch and resists the buccal mucosa from applying pressure thereto. Further the upper channel may be dimensioned to accommodate some expansion of the upper arch during the course of treatment and progressive correction over time of a Class 3 malocclusion.

The outer wall upper channel surface 33 has an outward step formation defined therein, intermediate the web upper channel surface 43 and its terminal upper edge, that extends substantially the full length of the wall. A thicker lower portion of the outer wall is conveniently able to receive a base member in the form of an internal frame structure encased therein as will be described in more detail below.

The inner wall upper channel surface 39 is quite different in shape and character to the outer wall channel surface 33. It is positioned so that it bears up against the lingual surface of the gums and associated teeth of a user with a snug fit. The snug fit assists in mounting the appliance 1 on the arch. The snug fitting upper portion of the inner wall 17 can apply pressure to the lingual surface of the gums and associated teeth, e.g. to encourage expansion of the upper arch.

The inner wall upper channel surface 39 curves upward and away from the upper channel web surface 43 into the space between the arms 30. The lingual surface 37 of the upper portion of the inner wall 17 complements broadly the inner wall upper channel surface 39. The vertical extent of the upper portion of the inner wall 17, which extends to a height of 3 to 5 mm above the web surface 43, is considerably less than that of the upper portion of the outer wall 13.

The degree of curvature of the upper portion of the inner wall 17 is pronounced and the extent of the inner wall upper channel surface 39 depletes in a direction away from the incisor region. Each rear end of the upper portion 17 comprises a short upright wall section.

The lower inner and outer wall portions 15, 19 will now be discussed. The lower portion of the outer wall 19 may extend downwardly below the web 11 at a small angle to the upper portion of the outer wall 13. The vertical extent of the lower portion of the outer wall 19 is much less than that for the upper portion 17, e.g. depending down a distance of about 4 to 6 mm below the lower channel web surface 45.

The lower portion of the outer wall 15 is designed to fit closely to the teeth and lower arch of a user. In contrast to the upper portion 13 it is not required to form an outer spacing formation tor resisting the application of pressure by the buccal mucosa to the upper arch tissues. Further it is not required to provide space for expansion of the lower arch.

Similarly the lower portion of the inner wall 19 is designed to fit closely to the teeth and lower arch of a user. The lower portion of the inner wall 19 curves away from the lower web surface into the space between the arms 30. Both the inner wall lower channel surface 41 and the lingual surface 37 of the lower portion of the inner wall 19 curve away from the web 11 in this fashion. The lower portion of the inner wall 19 depends downwardly below the web 11 a similar distance to the lower portion of the outer wall 15.

As with the upper portion of the inner wall 17 the degree of curvature is pronounced and the extent or width of the inner wall lower channel surface 41 depletes in a direction away from the incisor region 25 towards the rear of the molar regions 29. At the rear of the inner wall 9, the inner wall 9 is short and is substantially upright.

The appliance 1 also includes a tongue elevating formation (tongue elevator) 51 on the lower portion of the inner wall 19 for elevating the position adopted by a user's tongue in their mouth when the appliance is worn so that it does not apply a developmental pressure against the lower arch of a user.

The lower portion of the inner wall 19 defines a lower terminal edge and a terminal edge region 53 extending along the edge. The tongue elevator 51 is formed by having a thickened terminal edge region 53 extending along the incisor region 25 of the inner wall 9. In the illustrated embodiment the thickened terminal edge region 53 is in the form of a bulbous edge region having a diameter of 3-6mm that is formed integrally with the inner wall 9. The elevator 51 has an uppermost point shown at 55 and the uppermost point is about 2-4mm below the lower channel web surface. The elevator 51 forces a tip region of a user's tongue to adopt a position that is on top of the elevator as shown in the drawings where its influence on the development of the bone and tissue structures of the lower arch is reduced.

The rear ends of each arm of the mounting arrangement 3 are rounded as shown in the drawings. Specifically both the outer and inner walls 7, 9 are rounded and the walls curve respectively upwardly and downwardly away from the rear end of the web 11 which forms the rearmost point of each arm. This feature is shown most clearly in Figs. 6 and 7.

The outer wall 7 has a cutaway 57 defined in the upper portion 17 thereof. The cutaway 57 is shown positioned centrally in the incisor region 25 and permits the arms of the appliance 1 to be moved towards and away from each other. The inner wall 9 has two cutaways 59 on its upper portion 17 and a further cutaway 61 on its lower portion 19. These cutaways 59, 61 are broadly centrally positioned and facilitate movement of the arms of the appliance 1 towards and away from each other to accommodate different arch widths.

Further a tongue tab 63 is located on the upper portion of the inner wall 9 between the two cut away formations 59. The tongue tab 63 provides a tab against which a user can locate the tip of their tongue to correctly position their tongue. It should be understood that this is in the nature of a voluntary indicator to a user of a correct tongue position. It does not force the tongue to adopt a desired position to achieve a certain orthodontic effect like the elevator 51.

The upper portion of the outer wall 13 may include two further recess cutaways 65 on the molar regions 29 thereof, e.g. on left and right arms of the mounting arrangement. These further recess cutaways 65 are configured to contour around a bony protrusion on the gum tissues of the upper arch and thereby permit the protrusion to project though the cutaway 65. This feature therefore enhances user comfort when the appliance 1 is worn by a user but does not perform any orthodontic purpose.

Further the mounting arrangement 3 has a pair of apertures 67 defined through the outer wall 7, the web 11 and the inner wall 9.

The external form and shape of the appliance 1 is determined by a teeth contacting member including the mounting arrangement 3 and outer spacing formation 5 described above. It also includes a tongue elevating formation and a tongue tab. However at a structural level the appliance 1 includes another component that is a base member 71 encased within the teeth contacting member to help provide the appliance 1 with sufficient stiffness and rigidity to return to its arch form after being resiliently flexed and also to hold the outer spacing formation 5 which is the upper portion of the outer wall 13 away from the teeth and associate tissues of the upper arch.

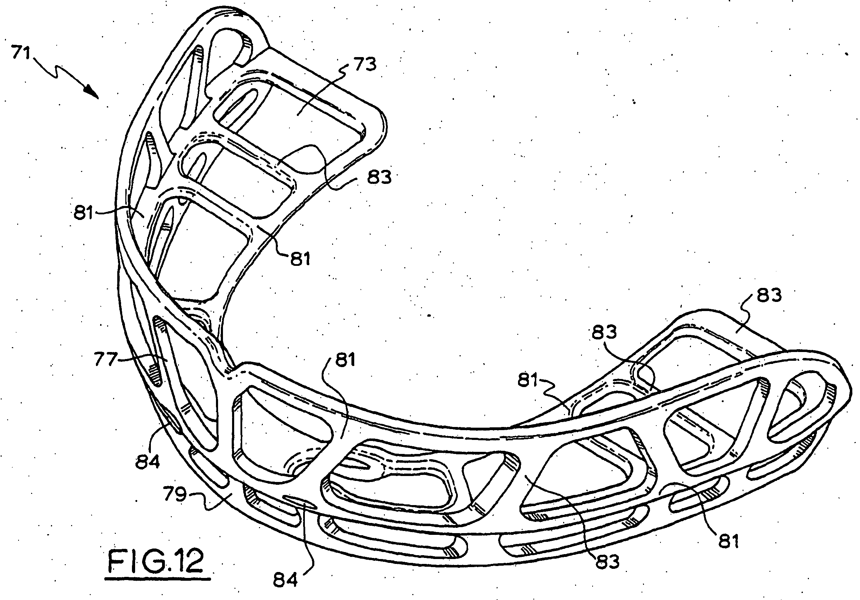

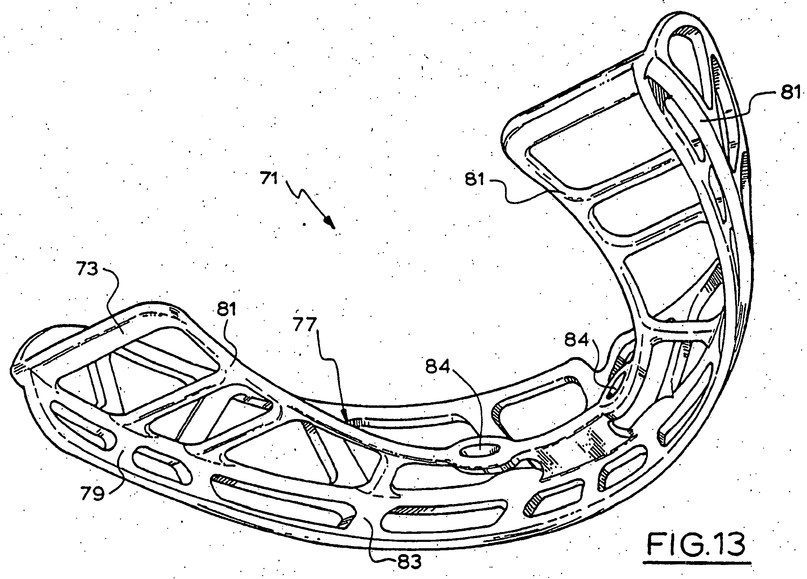

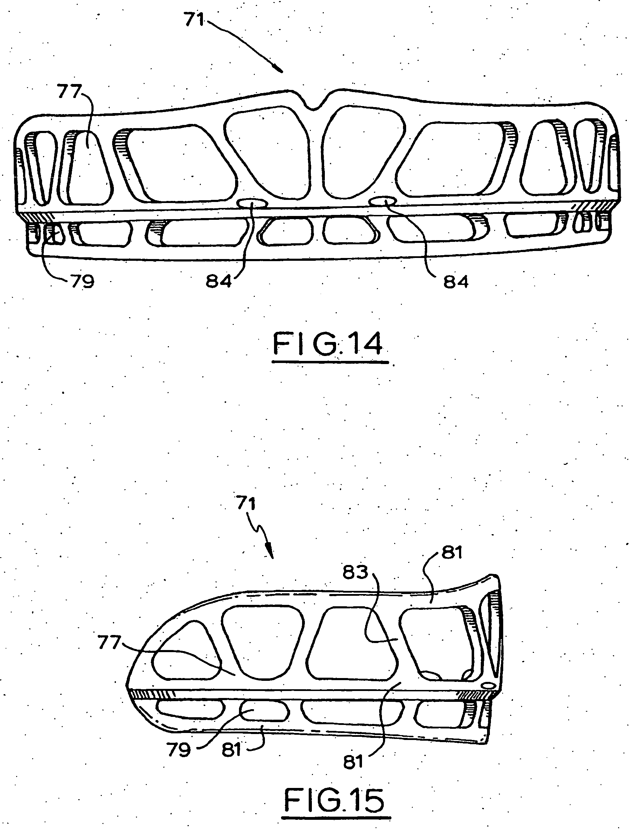

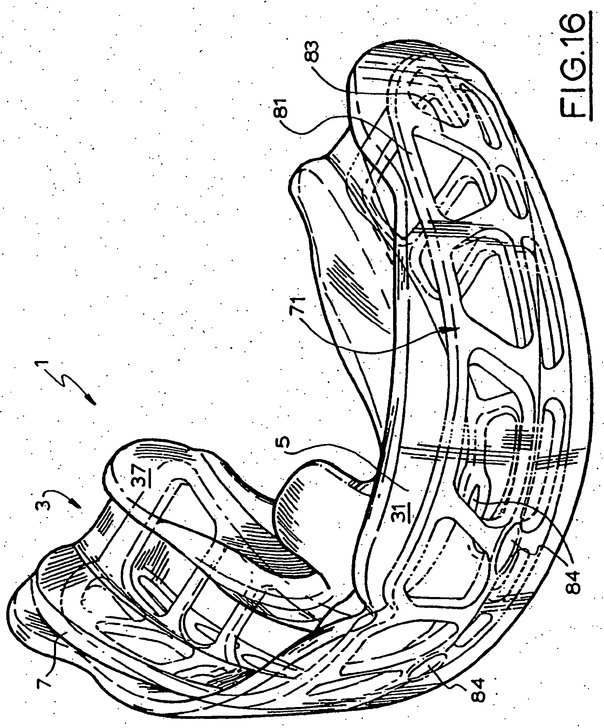

The base member 71 which is shown in Figs. 12 to 18 is in the form of an open frame structure comprising a framed web portion 73 that is broadly coextensive with the web 11 and a framed wall portion that is broadly coextensive with the outer wall 7. In turn the framed wall portion may comprise an upper framed wall portion 77 coextensive with the upper portion of the outer wall 13 and a lower framed wall portion 79 coextensive with the lower portion of the outer wall 15.

Each of the upper and lower framed wall portions 77, 79 and also the web portion 73 comprises two longitudinal frame members 81 and a number of cross members 83 extending between the longitudinal frame members 81 along their length. Further as shown in the drawings one longitudinal frame member 81 of the upper framed wall portion 77 is joined to one longitudinal frame member 81 of the lower framed wall portion 79. Yet further one longitudinal frame member 81 of the framed web portion 73 is joined to the joined frame members 81 of the upper and lower framed wall portions 77, 79. Further the lower framed wall portion 79 is offset, in an inward direction, from the upper framed wall portion 77, by an offset distance of about 1.0 mm to 1.5 mm. This offset mimics the offset of the upper portion of the outer wall 13 to the lower portion of the outer wall 15 and particularly to the outer wall channel surfaces 33, 35 thereof.

The framed structure 71 also includes passages 84 there through from the lingual to buccal surfaces thereof corresponding to those on the mounting arrangement 3. The passages 81, 67 in respectively the framed structure 71 and the mounting arrangement 3 coincide.

The framed structure 71 is made from a material that provides a suitable mount of stiffness and thereby structural strength while still being able to flex resiliently. The framed web portion 73 in particular is able to adjust to different arch forms and arch widths while applying a return force when it is moved out of its resting position tending to return it to its original position. The framed wall portion 75 is also required to have sufficient inherent strength to hold the soft tissues of the cheek and buccal mucosa away from the upper arch tissues of a user so that it does not apply a force to the maxilla bone of the upper arch.

The framed structure 71 is made of a resilient polymeric material that is capable of being moulded that is selected from the group consisting of polyamide, polyethylene, polypropylene, polyorethane, polycarbonate, or santoprene. In the illustrated embodiment the framed structure 71 is formed from a polyamide material sold under the trade mark NYLON™. This material has been found to have a suitable level of stiffness and rigidity while permitting resilient flexing out of its resting position. Further this material has a good memory and retains its ability to return to its original form when the flexing force is removed:

The teeth contacting member surrounds the framed structure for contacting the dental tissues of a user. The teeth contacting member has the ability to resiliently flex and can be conveniently formed of a silicon rubber material which has an ability to flex and deform and has some resilience such that it will tend to return to its original form once the fluxing force is removed. Further silicon rubber is soft and has some ability to conform to a surface against which it bears much like a cushion. It is therefore soft and comfortable when bearing against the gum tissues and teeth of a user. In the illustrated embodiment medical grade silicon rubber is used for the teeth contacting member that is approved for use on medical devices and can be purchased readily as a polymer.

The appliance 1 can be manufactured by the following method. The framed structure 71 is moulded from a polymeric material such as a polyamide in a first mould in an injection moulding operation. Thereafter the first mould is removed and replaced with a second mould and the teeth contacting member of silicon rubber is moulded onto the framed structure 71 in a second injection moulding operation. The mounting arrangement 3 is moulded directly onto the framed structure 71 in a process that is known as dual moulding. The final appliance 1 can be formed in two moulding operations and thus minimal labour and manual effort is required to manufacture the appliance.

The entire mounting arrangement 3 including the outer wall 7 forming the outer spacing formation 5 and the tongue elevator 51 is formed integrally in the second injection moulding operation. Further other features such as the cutaways 57, 59, 61 on the inner and outer walls 9, 7 and the tongue tab 63 and the breathing apertures 67 are also formed integrally in the second injection moulding operation. The appliance 1 can be manufactured in three to five different sizes with a corresponding number of different sized moulds and the applicant envisages that these sizes will be able to be used on the overwhelming majority of patients within the general population.

In use the appliance 1 can be used by a treatment provider that is a dental practitioner to treat dental malocclusions, particularly class 3 occlusions Generally the appliance 1 will be used on patients showing the initial signs of Class 3 occlusion while they are still in the developmental stages of arch growth and arch formation. Generally this is the age group of 8 -14 years. The treatment is commenced by an inspection of the dental occlusion of the patient by the dentist. The dentist will record the bite of the patient at the commencement of treatment by taking bite impressions and building a bite model of the upper and lower arches of a patient.

The dentist then selects a certain size of appliance from the range of sizes and fits it in position in a user's mouth. If necessary the dentist then tries appliances of different sizes until they identify the appliance size that best fits the patient. The appliance 1 does not require any moulding, e.g. by heating in boiling water, to fit it to the specific contours of a patient's mouth. The silicon outer layer is reasonable soft and conformable to some extent and the appliance 1 can generally be worn without discomfort.

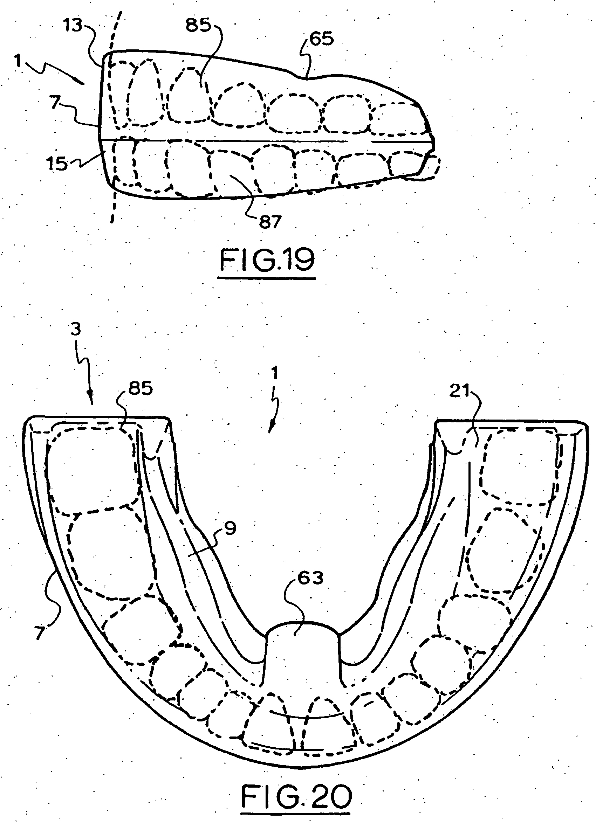

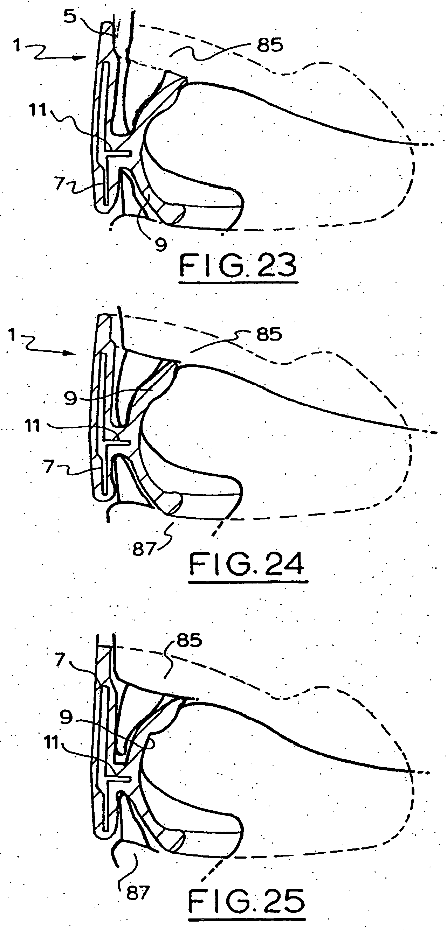

As illustrated in Figs. 19 to 25, the teeth of an upper arch 85 of a user are received in the upper channel 21 and the teeth of the lower arch 87 are received in the lower channel 21. Fig. 19 shows a side view and Fig. 20 shows a top plan view of the upper arch 85 and teeth received within the upper channel 21. Figs. 23 to 25 show a section that is taken through a midline of the appliance and a front region of the appliance 1. As shown the outer wall upper portion 13 holds the buccal mucosa of the user away from the upper arch 85 and gums of the user. There is a space between the upper arch 85 and the outer wall upper channel surface 33 so that no pressure is applied to the buccal surfaces of the arch tissues of a user.

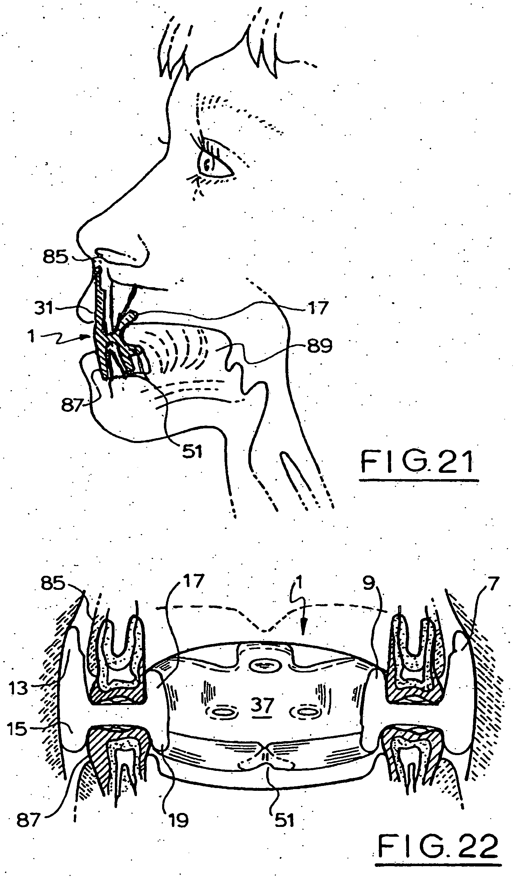

Fig. 21 shows a section through a user's mouth and through an appliance 1 mounted in position in the user's mouth. The section is taken through a midline of the appliance 1 and thus it shows a front region of the member 3. As shown the outer wall upper outer wall portion 13 holds the buccal mucosa of the user spaced away from the upper arch 85 and gums of the users.

Fig. 21 also shows the position of the tongue 89 of the user being raised by the tongue elevator 51 on the lower portion of the inner wall 19. The drawing clearly shows how the elevator 51 elevates the position of the tongue 89 to a height within the mouth where it does not have a developmental influence on the bone growth of the lower arch 87.

Fig. 22 Shows a rear view of the appliance 1 with the user's mouth tissues in the molar region being shown in section. The drawing shows a space between the gums over the teeth of the upper arch 85 and the outer wall upper channel surface 33 so that no pressure is being applied to the buccal surface of the upper arch tissues to inhibit bone growth of the upper arch.

Further these drawings show how the upper and lower channels 21, 23 are held in fixed position relative to each other to encourage the upper and lower arches 85, 87 that are received in these channels to adopt the correct relative position to each other for correct dental occlusion.

The tongue 89 is positioned above the lower arch 87 so that it does not stimulate further growth arid development of the lower arch 87. Further by holding the buccal mucosa 91 away from the upper arch tissues so that it does not apply an inward pressure thereto, the upper arch 86 is permitted to develop and expand.

During treatment the patient will be directed to wear the appliance 1 for several hours a day and particularly at night time. At periodic intervals the dentist checks on the progress of the treatment. Over the time the upper arch 85 is encouraged to develop and expand to match the lower arch 87. In particular the width of the arch 85 in the molar regions should expand. Further the anterior incisor region of the upper arch 85 should develop in an anterior direction to develop the mid facial region at the same time that the width of the arch 85 is expanding.

After some time the incisors 93 of the lower arch 87 should be received behind the incisors 95 of the upper arch 85. This is an important stage in the treatment because then the upper arch incisors 95 tend to hold the incisors of the lower arch 93 in their position and counter balance any outward force on the lower arch 87.

The treatment is complete when the incisors of the upper arch are about 1.5 mm to 2 mm in front of the incisors of the lower arch as shown in Fig. 1. Further a portion of each molar on the upper arch 87 should be positioned outside of the corresponding molar of the lower arch 85 as shown in Fig. 2. The progression of treatment of this malocclusion is shown in Figs. 23 to 25.

Once the class 3 occlusion has been corrected the appliance may be worn for shorter periods but may still be worn regularly to maintain the correct dental occlusion. Thus it acts as both an active and a passive orthodontic appliance

Thus the appliance described above with reference to the drawings works at several different levels simultaneously to help correct a class 3 malocclusion. In particular it relieves the pressure of the buccal mucosa against the upper arch tissues along the full extent of the arch and elevates the tongue position so that it does not apply pressure to the lower arch whereby to stimulate development of the bone structures of the lower arch.

In particular the outer wall of the appliance and particularly the upper portion of the outer wall forms an outer spacing formation that holds the buccal mucosa and associated soft tissues in the cheek of the user spaced away from the outer surface of the upper arch. The stiffness of the outer wall provides the necessary strength to hold the buccal mucosa away from the tissues of the upper arch. By removing the force of the soft tissues bearing against the arch a force inhibiting development of the upper arch is removed and this encourages upper arch development. A further advantage is that by having a continuous outer wall that extends along the full incisor, canine and molar regions, the application of an inward pressure along the full length of the upper arch is alleviated. This encourages the full length of the upper arch including the mid facial region to develop and grow simultaneously.

A further advantage of the appliance described above with reference to the drawings is that it has a tongue elevating formation that raises the position of the tongue in the mouth so that it bears against the anterior incisor teeth of the upper arch and not the incisor teeth of the lower arch. The pressure of a tongue bearing against the incisor teeth of the lower arch promotes development of the lower arch and may cause overdevelopment of the lower arch relative to the upper arch. By repositioning the tongue so that it does not bear against the teeth of the lower arch, the force stimulating lower arch growth and development is removed.

A further advantage of the mounting arrangement and the outer wall is that it has an ability to resiliently flex out of a desired arch form while still retaining a good memory. Thus when the mounting arrangement is moved or flexed out of its resting arch form it will exert a return force tending to return the arch to its original resting form. This can apply an outward force to the upper arch encouraging it to expand outwardly.

An advantage of the resilient flexibility of the mounting arrangement with the inner and outer walls and the web is that it can be fitted to users having different arch sizes and different teeth sizes. A further advantage of the appliance described above is that notwithstanding its stiffness and resilient strength, the surface of the appliance that contacts the teeth and gum tissues is soft and conformable and is comfortable against the gums of a user. This is important if the appliance is to be worn by a user when they sleep at night.

A yet further advantage of the appliance described above is that it has upper and lower channels for forcing the upper and lower arches of a user to take up the correct positions relative to each other when the appliance is worn by a user. This promotes and encourages the arches to adopt the correct relative position to each other which is an important part of correct dental occlusion.

A yet further advantage of the appliance described above is that the upper and lower channels and particularly the outer channel surfaces thereof are off-set relative to each other by 0.5 mm to 2.0 mm, e.g. 1.0 mm to 1.5 mm to replicate correct dental occlusion. That is the teeth of the upper arch are positioned outwardly of the corresponding teeth of the lower arch. Consequently in the final stages of treatment the appliance will tend to move the teeth to the point where the teeth of the lower arch are correctly set back from those of the upper arch bringing them into a position representing correct dental occlusion.

A further advantage of the appliance described above with reference to the drawings is that it can be formed by injection moulding. The features of the teeth mounting arrangement described above can be moulded integrally with the rest of the teeth contacting member. By forming the structural features integrally with the rest of the teeth contacting member, a manufacture of the appliance is simplified. The internal framed structure can be injection moulded in a first step and then the teeth contacting member may be moulded onto the base member in a second injection moulding step. These features also enable the appliance to be manufactured on a commercial scale so that it can be supplied as an off the shelf item. Applicant envisages that it will be made with three different arch sizes and these arch sizes will be able to be fitted to most users. The appliance will not be custom moulded to fit the mouth of each patient in a dental laboratory and as a result the technology can be provided at a lower cost and be made more accessible to the patient population at large.

It will of course be realised that the above has been given only by way of illustrative example of the invention.

## Claims

1. An orthodontic appliance (1) for being received in the mouth of a user, comprising:
- a mounting arrangement (3) for mounting over an upper arch of a user, wherein the mounting arrangement comprises an outer wall (7) and an inner wall (9), and a web (11) extending between the inner and the outer walls, and wherein the outer wall, the web, and the inner wall collectively define an upper channel (21) within which the upper arch teeth can be received to mount the appliance to an upper arch of a user, and define a lower channel (23) within which the lower arch teeth can be received, and the outer wall (7) has a buccal outer surface (31), an upper channel surface (33) and a lower channel surface (35), and the inner wall (9) has a lingual inner surface (37), an upper channel surface (39) and a lower channel surface (41), and the web (11) includes an upper channel web surface (43) and a lower channel web surface (45), the outer wall has an upper outer wall portion (13) above the web (11) and a lower outer wall portion (15) below the web, and the inner wall (9) has an upper inner wall portion (17) above the web (11) and a lower inner wall portion (19) below the web,
each of the outer (7) and inner (9) walls includes an incisor region extending across the incisor region of a user's arch and two canine regions on each side of the incisor region for extending across the canine regions of a user, and two molar regions on each side for extending across the molar regions of a user, and the mounting arrangement, including each of the inner and outer walls, has a generally curved form with a curved incisor region and the canine and molar regions being in the form of two arms extending rearwardly from each end of the incisor region whereby to correspond generally to the form of the arch of a user, and
the orthodontic appliance being **characterized in that** the mounting arrangement (3) is resiliently flexible, and the outer (7) and inner (9) walls and the web (11) are able to flex resiliently to be deformed out of a resting position corresponding to a desired arch form to accommodate a different arch width in a user, and the walls and the web apply a force to the arch of a user tending to return it to the resting position; and **in that** the orthodontic appliance further includes:
- an outer spacing formation (5) on the mounting arrangement (3) for holding a portion of the buccal mucosa away from at least one of the incisor and canine regions of a user's upper arch so that the spaced portion of the buccal mucosa does not apply an inward force to this region of the upper arch, and also for holding a portion of the buccal mucosa away from the molar region of the user's upper arch, and extending continuously across the incisor region, the canine region and the molar region, and wherein the outer spacing formation (5) is formed by the outer wall (7) of the mounting arrangement (3) where the outer wall upper channel surface (33) is vertically off-set relative to the outer wall lower channel surface (35); and
- a tongue elevating formation (51) on the mounting arrangement (3) for elevating the tongue of a user to a position where it does not apply pressure to the lower arch of a user,and wherein the tongue elevating formation (51) is formed on the lower portion of the inner wall (9).

2. An orthodontic appliance (1) according to claim 1, wherein the outer spacing formation (5) can hold a portion of the buccal mucosa away from the incisor region of the user's upper arch.

3. An orthodontic appliance (1) according to claim 1, wherein the upper channel (21) is defined by the outer wall upper channel surface (33), the upper channel web surface (43) and the inner wall upper channel surface (39), and wherein the lower channel (23) is defined by the outer wall lower channel surface (35), the lower channel web surface (45) and the inner wall lower channel surface (41).

4. An orthodontic appliance (1) according to claim 1, wherein the outer wall lower channel surface (35) is set back relative to the outer wall upper channel surface (33) by a distance of 0.5mm -2.0mm.

5. An orthodontic appliance (1) according to any one of claims 1 to 3, wherein the upper channel web surface (43) is substantially planar and the outer wall upper channel surface (33) extends upwardly away from an outer end of the upper channel web surface (43) at an angle of 80 degrees to 100 degrees to the upper channel web surface (43).

6. An orthodontic appliance (1) according to any one of claims 1 to 4, wherein the outer wall channel surface (33) extends up to a height of at least 10 mm above the upper channel web surface (43) along the incisor region thereof.

7. An orthodontic appliance (1) according to any one of claims 1 to 5, wherein the outer wall upper channel surface (33) has a height of at least 8 mm above the upper channel web surface (43) along substantially its full length.

8. An orthodontic appliance (1) according to any one of claims 1 to 6, wherein the upper channel surface (39) of the inner wall (9) is arranged and positioned so that it can bear up against the teeth and associated gums of the upper arch of a user.

9. An orthodontic appliance (1) according to any one of claims 1 to 7, wherein an enlarged lower terminal edge region of the inner wall comprises a thickened and bulbous terminal edge region extending along at least the incisor region of the inner wall, and wherein a user's tongue is encouraged to adopt a position sitting on an upper surface of the bulbous terminal edge region; and wherein the tongue elevating formation (51) is vertically positioned relative to the web (11) such that an uppermost point (55) of the tongue elevating formation (51) is positioned 2 mm to 6 mm beneath the lower channel web surface (45) so as to position a user's tongue such that it does not exert pressure against the lower arch of a user.

10. An orthodontic appliance (1) according to any one of claims 1 or 3 to 5, wherein the mounting arrangement (3) is formed from a teeth contacting member made of a cushioning material for comfortable fitting against the gums of a user, and a base member (71) that is encased within the teeth contacting member made of a stiffer material than the teeth contacting member for providing sufficient structural rigidity to the mounting arrangement (3) while still permitting some resilience to the mounting arrangement.

11. An orthodontic appliance (1) according to claim 10, wherein the base member (71) comprises an open frame structure to assist in providing the mounting arrangement with resilience, and wherein the open frame structure comprises a frame web portion (73) broadly coextensive with the web (11) of the mounting arrangement and a frame wall portion (75) that is broadly coextensive with the outer wall (7) of the mounting arrangement.

12. An orthodontic appliance (1) according to claim 11, wherein the frame wall portion (75) comprises an upper frame wall portion (77) on one side of the web portion extending across the front of the upper channel (21) and a lower frame wall portion (79) extending across the front of the lower channel (23).

13. An orthodontic appliance (1) according to claim 12, wherein the lower frame wall portion (79) is vertically offset with respect to the upper frame wall portion (77).

14. An orthodontic appliance (1) according to claim 12, wherein the lower frame wall portion (79) is set back relative to the upper frame wall portion (77) by a distance of 0.5mm to 2.0mm.

## Patentansprüche

1. Orthodontische Vorrichtung (1) zur Aufnahme im Mund eines Benutzers, umfassend:
- eine Befestigungsanordnung (3) zur Befestigung über einem oberen Zahnbogen eines Benutzers, wobei die Befestigungsanordnung eine Außenwand (7) und eine Innenwand (9) und einen sich zwischen den Innen- und Außenwänden erstreckenden Steg (11) umfasst, und wobei die Außenwand, der Steg und die Innenwand gemeinsam einen oberen Kanal (21) definieren, in dem die Zähne des oberen Zahnbogens aufgenommen werden können, um die Vorrichtung an einem oberen Zahnbogen eines Benutzers zu befestigen, und einen unteren Kanal (23) definieren, in dem die Zähne des unteren Zahnbogens aufgenommen werden können, und wobei die Außenwand (7) eine bukkale Außenseite (31), eine obere Kanalfläche (33) und eine untere Kanalfläche (35) aufweist, und die Innenwand (9) eine linguale Innenseite (37), eine obere Kanalfläche (39) und eine untere Kanalfläche (41) aufweist, und der Steg (11) eine obere Kanalstegfläche (43) und eine untere Kanalstegfläche (45) aufweist, die Außenwand einen oberen Außenwandabschnitt (13) über dem Steg (11) und einen unteren Außenwandabschnitt (15) unter dem Steg aufweist, und die Innenwand (9) einen oberen Innenwandabschnitt (17) über dem Steg (11) und einen unteren Innenwandabschnitt (19) unter dem Steg aufweist,
wobei die Außenwand (7) und die Innenwand (9) jeweils eine Schneidezahnregion, die sich über die Schneidezahnregion des Zahnbogens eines Benutzers erstreckt, und zwei Eckzahnregionen auf jeder Seite der Schneidezahnregion zur Erstreckung über die Eckzahnregionen eines Benutzers, und zwei Backenzahnregionen auf jeder Seite zur Erstreckung über die Backenzahnregionen eines Benutzers aufweisen, und wobei die Befestigungsanordnung, die jede der Innen- und Außenwände aufweist, eine allgemein gebogene Gestalt mit einer gebogenen Schneidezahnregion aufweist und wobei die Eckzahn- und Backenzahnregionen in Form von zwei Armen vorliegen, die sich von jedem Ende der Schneidezahnregion nach hinten erstrecken, um allgemein der Form des Zahnbogens eines Benutzers zu entsprechen, und
wobei die orthodontische Vorrichtung **dadurch gekennzeichnet ist, dass** die Befestigungsanordnung (3) nachgiebig flexibel ist und sich die Außenwand (7) und die Innenwand (9) und der Steg (11) nachgiebig biegen können, um aus einer Ruheposition, die einer gewünschten Zahnbogenform entspricht, verformt zu werden, um eine andere Zahnbogenbreite in einem Benutzer zu berücksichtigten, und die Wände und der Steg eine Kraft auf den Zahnbogen eines Benutzers ausüben, die dazu tendiert, diesen wieder in die Ruheposition zurückzuführen; und dass die orthodontische Vorrichtung ferner Folgendes aufweist:
- eine äußere Abstandsformation (5) auf der Befestigungsanordnung (3) zum Weghalten eines Teils der Wangenschleimhaut mindestens von der Schneidezahnregion und/oder von der Eckzahnregion des oberen Zahnbogens eines Benutzers, so dass der beabstandete Abschnitt der Wangenschleimhaut keine einwärts gerichtete Kraft auf diese Region des oberen Zahnbogens aufbringt, und auch zum Weghalten eines Teils der Wangenschleimhaut von der Backenzahnregion des oberen Zahnbogens des Benutzers, und sich kontinuierlich über die Schneidezahnregion, die Eckzahnregion und die Backenzahnregion erstreckend, und wobei die äußere Abstandsformation (5) von der Außenwand (7) der Befestigungsanordnung (3) gebildet wird, wobei die obere Kanalfläche (33) der Außenwand bezüglich der unteren Kanalfläche (35) der Außenwand vertikal versetzt ist; und
- eine Zungenhebeformation (51) auf der Befestigungsanordnung (3) zum Anheben der Zunge eines Benutzers bis zu einer Position, in der sie keinen Druck auf den unteren Zahnbogen eines Benutzers ausübt, und wobei die Zungenhebeformation (51) auf dem unteren Abschnitt der Innenwand (9) gebildet ist.

2. Orthodontische Vorrichtung (1) nach Anspruch 1, wobei die äußere Abstandsformation (5) einen Teil der Wangenschleimhaut von der Schneidezahnregion des oberen Zahnbogens des Benutzers entfernt halten kann.

3. Orthodontische Vorrichtung (1) nach Anspruch 1, wobei der obere Kanal (21) von der oberen Kanalfläche (33) der Außenwand, der oberen Kanalstegfläche (43) und der oberen Kanalfläche (39) der Innenwand definiert wird, und wobei der untere Kanal (23) von der unteren Kanalfläche (35) der Außenwand, der unteren Kanalstegfläche (45) und der unteren Kanalfläche (41) der Innenwand definiert wird.

4. Orthodontische Vorrichtung (1) nach Anspruch 1, wobei die untere Kanalfläche (35) der Außenwand bezüglich der oberen Kanalfläche (33) der Außenwand um einen Abstand von 0,5 mm - 2,0 mm zurückgesetzt ist.

5. Orthodontische Vorrichtung (1) nach einem der Ansprüche 1 bis 3, wobei die obere Kanalstegfläche (43) im Wesentlichen ebenflächig ist und sich die obere Kanalfläche (33) der Außenwand nach oben und weg von einem Außenende der oberen Kanalstegfläche (43) in einem Winkel von 80 Grad bis 100 Grad zur oberen Kanalstegfläche (43) erstreckt.

6. Orthodontische Vorrichtung (1) nach einem der Ansprüche 1 bis 4, wobei sich die Kanalfläche (33) der Außenwand bis zu einer Höhe von mindestens 10 mm über der oberen Kanalstegfläche (43) entlang der Schneidezahnregion davon erstreckt.

7. Orthodontische Vorrichtung (1) nach einem der Ansprüche 1 bis 5, wobei die obere Kanalfläche (33) der Außenwand eine Höhe von mindestens 8 mm über der oberen Kanalstegfläche (43) im Wesentlichen entlang ihrer vollständigen Länge aufweist.

8. Orthodontische Vorrichtung (1) nach einem der Ansprüche 1 bis 6, wobei die obere Kanalfläche (39) de Innenwand (9) derart angeordnet und platziert ist, dass sie an den Zähnen und dem zugehörigen Zahnfleisch des oberen Zahnbogens eines Benutzers anliegen kann.

9. Orthodontische Vorrichtung (1) nach einem der Ansprüche 1 bis 7, wobei eine vergrößerte untere terminale Randregion der Innenwand eine verdickte und bauchige terminale Randregion umfasst, die sich mindestens entlang der Schneidezahnregion der Innenwand erstreckt, und wobei die Zunge eines Benutzers dazu ermuntert wird, eine Position einzunehmen, in der sie auf einer Oberseite der knolligen terminalen Randregion sitzt; und wobei die Zungenhebeformation (51) bezüglich des Stegs (11) vertikal angeordnet ist, derart, dass ein oberster Punkt (55) der Zungenhebeformation (51) 2 mm bis 6 mm unter der unteren Kanalstegfläche (45) angeordnet ist, um die Zunge eines Benutzers derart zu platzieren, dass sie keinen Druck gegen den unteren Zahnbogen eines Benutzers ausübt.

10. Orthodontische Vorrichtung (1) nach einem der Ansprüche 1 oder 3 bis 5, wobei die Befestigungsanordnung (3) von einem Zahnkontaktelement gebildet wird, das aus einem Polstermaterial besteht, damit es bequem am Zahnfleisch eines Benutzers anliegen kann, und von einem Basiselement (71), das in dem Zahnkontaktelement eingeschlossen ist und aus einem steiferen Material besteht als das Zahnkontaktelement, um der Befestigungsanordnung (3) ausreichende strukturelle Steifheit zu verleihen, während eine gewisse Nachgiebigkeit der Befestigungsanordnung gestattet ist.

11. Orthodontische Vorrichtung (1) nach Anspruch 10, wobei das Basiselement (71) eine offene Rahmenstruktur umfasst, die dazu beiträgt, dass der Befestigungsanordnung Nachgiebigkeit verliehen werden kann, und wobei die offene Rahmenstruktur einen Rahmenstegabschnitt (73) umfasst, der mit dem Steg (11) der Befestigungsanordnung allgemein koextensiv ist, und einen Rahmenwandabschnitt (75), der mit der Außenwand (7) der Befestigungsanordnung allgemein koextensiv ist.

12. Orthodontische Vorrichtung (1) nach Anspruch 11, wobei der Rahmenwandabschnitt (75) einen oberen Rahmenwandabschnitt (77) auf einer Seite des Stegabschnitts umfasst, der sich über die Vorderseite des oberen Kanals (21) erstreckt, und einen unteren Rahmenwandabschnitt (79), der sich über die Vorderseite des unteren Kanals (23) erstreckt.

13. Orthodontische Vorrichtung (1) nach Anspruch 12, wobei der untere Rahmenwandabschnitt (79) bezüglich des oberen Rahmenwandabschnitts (77) vertikal versetzt ist.

14. Orthodontische Vorrichtung (1) nach Anspruch 12, wobei der untere Rahmenwandabschnitt (79) bezüglich des oberen Rahmenwandabschnitts (77) um einen Abstand von 0,5 mm bis 2,0 mm zurückgesetzt ist.

## Revendications

1. Appareil orthodontique (1) destiné à être placé dans la bouche d'un utilisateur, comprenant :
un agencement de montage (3) à monter sur l'arc supérieur d'un utilisateur, dans lequel l'agencement de montage comprend une paroi extérieure (7), une paroi intérieure (9) et une toile (11) s'étendant entre les parois intérieure et extérieure, et dans lequel la paroi extérieure, la toile et la paroi intérieure délimitent collectivement un canal supérieur (21) à l'intérieur duquel les dents de l'arc supérieur peuvent être logées pour monter l'appareil sur l'arc supérieur d'un utilisateur et délimitent un canal inférieur (23) à l'intérieur duquel les dents de l'arc inférieur peuvent être logées, et la paroi extérieure (7) comporte une surface extérieure buccale (31), une surface (33) de canal supérieur et une surface (35) de canal inférieur, et la paroi intérieure (9) comporte une surface intérieure linguale (37), une surface (39) de canal supérieur et une surface (41) de canal inférieur, et la toile (11) comprend une surface de toile (43) de canal supérieur et une surface de toile (45) de canal inférieur, la paroi extérieure comporte une partie supérieure (13) de paroi extérieure au-dessus de la toile (11) et une partie inférieure (15) de paroi extérieure en dessous de la toile, et la paroi intérieure (9) comporte une partie supérieure (17) de paroi intérieure au-dessus de la toile (11) et une partie inférieure (19) de paroi intérieure en dessous de la toile,
chacune des parois extérieure (7) et intérieure (9) comporte une zone incisives s'étendant sur toute la zone incisives de l'arc d'un utilisateur et deux zones canines, de chaque côté de la zone incisives, s'étendant sur l'ensemble des zones canines de l'utilisateur, et deux zones molaires de chaque côté qui s'étendant sur l'ensemble des zones molaires de l'utilisateur, et l'agencement de montage, y compris chacune des parois extérieure et intérieure, présente une forme dans l'ensemble courbe avec une zone incisives courbe et les zones canines et molaires ont la forme de deux bras s'étendant vers l'arrière depuis chaque extrémité de la zone incisives, moyennant quoi il correspond dans l'ensemble à la forme de l'arc de l'utilisateur, et l'appareil orthodontique étant **caractérisé en ce que** l'agencement de montage (3) est flexible élastiquement, et les parois extérieure (7) et intérieure (9) et la toile (11) sont capables de fléchir élastiquement pour sortir par déformation d'une position de repos correspondant à la forme souhaitée d'arc pour accueillir une largeur différente d'arc chez un utilisateur, et les parois et la toile appliquent une force à l'arc de l'utilisateur et tendent à le ramener à la position de repos ; et
**en ce que** l'appareil orthodontique comprend en outre :
- une formation extérieure (5) d'espacement sur l'agencement de montage (3) pour tenir une partie de la muqueuse buccale à l'écart d'au moins une des zones incisives et canines de l'arc supérieur de l'utilisateur afin que la partie écartée de la muqueuse buccale n'applique pas une force vers l'intérieur à cette zone de l'arc supérieur, et aussi pour tenir une partie de la muqueuse buccale à l'écart de la zone molaires de l'arc supérieur de l'utilisateur, et qui s'étend sur l'ensemble de la zone incisives, la zone canines et la zone molaires, et dans lequel la formation extérieure (5) d'espacement est constituée par la paroi extérieure (7) de l'agencement de montage (3) là où la surface (33) de canal supérieur de paroi extérieure est décalée verticalement par rapport à la surface (35) de canal inférieur de paroi extérieure ; et
- une formation (51) d'élévation de langue sur l'agencement de montage (3) pour hausser la langue de l'utilisateur à une position où elle n'applique pas de pression sur l'arc inférieur de l'utilisateur, et dans lequel la formation (51) d'élévation de langue est constituée sur la partie inférieure de la paroi intérieure (9).

2. Appareil orthodontique (1) selon la revendication 1, dans lequel la formation extérieure (5) d'espacement peut tenir une partie de la muqueuse buccale à l'écart de la zone incisives de l'arc supérieur de l'utilisateur.

3. Appareil orthodontique (1) selon la revendication 1, dans lequel le canal supérieur (21) est délimité par la surface (33) de canal supérieur de paroi extérieure, la surface de toile (43) de canal supérieur et la surface (39) de canal supérieur de paroi intérieure, et dans lequel le canal inférieur (23) est délimité par la surface (35) de canal inférieur de paroi extérieure, la surface de toile (45) de canal inférieur et la surface (41) de canal inférieur de paroi intérieure.

4. Appareil orthodontique (1) selon la revendication 1, dans lequel la surface (35) de canal inférieur de paroi extérieure est en retrait par rapport à la surface (33) de canal supérieur de paroi extérieure d'une distance de 0,5 mm à 2,0 mm.

5. Appareil orthodontique (1) selon l'une quelconque des revendications 1 à 3, dans lequel la surface de toile (43) de canal supérieur est sensiblement plane et la surface (33) de canal supérieur de paroi extérieure s'étend vers le haut à partir d'une extrémité extérieure de la surface de toile (43) de canal supérieur en faisant un angle de 80 degrés à 100 degrés avec la surface de toile (43) de canal supérieur.

6. Appareil orthodontique (1) selon l'une quelconque des revendications 1 à 4, dans lequel la surface (33) de canal supérieur de paroi extérieure s'étend jusqu'à une hauteur d'au moins 10 mm au-dessus de la surface de toile (43) de canal supérieur le long de sa zone incisives.

7. Appareil orthodontique (1) selon l'une quelconque des revendications 1 à 5, dans lequel la surface (33) de canal supérieur de paroi extérieure a une hauteur d'au moins 8 mm au-dessus de la surface de toile (43) de canal supérieur le long de sensiblement toute sa longueur.

8. Appareil orthodontique (1) selon l'une quelconque des revendications 1 à 6, dans lequel la surface (39) de canal supérieur de la paroi intérieure (9) est agencée et placée de façon à pouvoir porter contre les dents et gencives associées de l'arc supérieur de l'utilisateur.

9. Appareil orthodontique (1) selon l'une quelconque des revendications 1 à 7, dans lequel une zone agrandie de bord terminal inférieur de la paroi intérieure comprend une zone de bord terminal épaissi et bulbeux s'étendant au moins le long de la zones incisives de la paroi intérieure, et dans lequel la langue de l'utilisateur est incitée à adopter une position se trouvant sur une surface supérieure de la zone de bord terminal bulbeux ; et dans lequel la formation (51) d'élévation de langue est placée verticalement par rapport à la toile (11) de telle sorte que le point le plus haut (55) de la formation (51) d'élévation de langue est placé 2 mm à 6 mm en dessous de la surface de toile (45) de canal inférieur afin de placer la langue de l'utilisateur de telle sorte qu'elle n'exerce pas de pression contre l'arc inférieur de l'utilisateur.

10. Appareil orthodontique (1) selon l'une quelconque des revendications 1 ou 3 à 5, dans lequel l'agencement de montage (3) est constitué à partir d'un élément en contact avec les dents fait d'une matière tampon pour une mise en place confortable contre les gencives de l'utilisateur et d'un élément de base (71) qui est enrobé à l'intérieur de l'élément en contact avec les dents et fait d'une matière plus rigide que l'élément en contact avec les dents pour assurer une rigidité structurelle suffisante à l'agencement de montage (3) tout en lui permettant quand même une certaine élasticité.

11. Appareil orthodontique (1) selon la revendication 10, dans lequel l'élément de base (71) comprend une structure à cadre ouvert pour aider à doter d'élasticité l'agencement de montage, et dans lequel la structure à cadre ouvert comprend une partie de toile (73) de cadre en gros de même étendue que la toile (11) de l'agencement de montage et une partie de paroi (75) de cadre qui est en gros de même étendue que la paroi extérieure (7) de l'agencement de montage.

12. Appareil orthodontique (1) selon la revendication 11, dans lequel la partie de paroi (75) de cadre comprend une partie de paroi supérieure (77) de cadre sur un côté de la partie de toile s'étendant sur tout l'avant du canal supérieur (21) et une partie de paroi inférieure (79) de cadre s'étendant sur tout l'avant du canal inférieur (23).

13. Appareil orthodontique (1) selon la revendication 12, dans lequel la partie de paroi inférieure (79) de cadre est décalée verticalement par rapport à la partie de paroi supérieure (77) de cadre.

14. Appareil orthodontique (1) selon la revendication 12, dans lequel la partie de paroi inférieure (79) de cadre est en retrait par rapport à la partie de paroi supérieure (77) de cadre d'une distance de 0,5 mm à 2,0 mm.
